# EUROPEAN PATENT SPECIFICATION

(11) **EP 3 990 384 B1**
(45) Date of publication and mention of the grant of the patent: **20.12.2023**
(21) Application number: 20732886.5
(22) Date of filing: 15.06.2020
(51) Int. Cl.: C01B 21/086, C01B 21/092, C01B 21/093, H01M 10/0568, H01M 10/052

(54) **METHOD FOR PRODUCING ALKALI SALTS OF BIS(FLUOROSULFONYL)IMIDE**
VERFAHREN ZUR HERSTELLUNG VON ALKALISALZEN VON BIS(FLUORSULFONYL)IMID
PROCÉDÉ DE PRODUCTION DE SELS ALCALINS DE BIS(FLUOROSULFONYL)IMIDE

(30) Priority: 26.06.2019 EP 19182577
(43) Date of publication of application: 04.05.2022
(73) Proprietor: SOLVAY SA, 1120 Bruxelles (BE)
(72) Inventor: GUELEN, Simon, 69007 LYON (FR); REBMANN, Edouard, 69360 Solaize (FR); BUISINE, Olivier, 69230 Saint Genis-Laval (FR)
(74) Representative: Benvenuti, Federica
(86) International application number: PCT/EP2020/066449
(87) International publication number: WO 2020/260047

(56) References cited:
- EP-A1- 2 660 196
- EP-A1- 3 466 871
- CN-B- 102 055 018
- JP-A- 2018 055 882
- KR-B1- 101 982 602

## Description

### TECHNICAL FIELD

The present invention relates to a method for producing alkali salts of bis(fluorosulfonyl)imide. More specifically, the invention provides a new method for producing alkali salts of bis(fluorosulfonyl)imide which provides a high-purity product.

### BACKGROUND ART

Bis(fluorosulfonyl)imide (commonly represented by "FSIH") and salts thereof, in particular the lithium salt of bis(fluorosulfonyl)imide (commonly represented by "LiFSI"), are useful as intermediate compound or as final compound in a variety of technical field. Bis(fluorosulfonyl)imide and salts thereof are especially useful in battery electrolytes. For this type of use, the presence of impurities is an important issue.

The production of bis(fluorosulfonyl)imide and of the lithium salt of bis(fluorosulfonyl)imide is widely described in the literature. Among the various technologies described, the majority uses a fluorination reaction either with HF or with metal fluorides, like KF, CsF, AsF₃, SbF₃, CuF₂, ZnF₂, SnF₂, PbF₂, BiF₃, etc. Other technologies have been developed, for example using chlorosulfonyl isocyanate in the presence of oleum and of ammonium fluoride or else using urea and fluorosulfonic acid.

Two similar patent applications EP 2 674 395 and EP 2 660 196 suggest that maximum suppression of the contamination of metal impurities could be obtained by first preparing a fluorosulfonylimide ammonium salt from a specific chlorosulfonylimide ammonium salt, and then reacting the thus obtained fluorosulfonylimide ammonium salt with an alkali metal compound to obtain a fluorosulfonylimide alkali metal salt. The first fluorination step could be carried out by either a reaction with hydrogen fluoride according to EP 2 674 395, or a reaction with NH₄F(HF)ₚ (p = 0-10) according to EP 2 660 196. It is claimed that the thus obtained fluorosulfonylimide alkali metal salt contains no metal impurities that degrade electrolyte properties.

However, the inventors of the present invention discovered the presence of unexpected new impurities within the fluorosulfonylimide alkali metal salt obtained according to EP 2 674 395 and EP 2 660 196. Without wishing to be bound by any theory, it is believed that ammonia generated during the reaction of cation exchange inconveniently reacts with intermediate products and/or with the solvent to form undesirable by-products. Even if the cation exchange reaction is carried out at reduced pressure, some ammonia remains in the reaction medium, due to the thermodynamic equilibrium between liquid phase and gas phase.

The prior art document WO 2016/093399 further disclose a method for producing and purifying lithium salt of sulfonyl imide. Said method consists in reacting chlorosulfonic acid and chlorosulfonyl isocyanate to prepare chlorosulfonyl imide, then reacting said chlorosulfonyl imide with a fluorinated ammonium to prepare a fluorosulfonyl imide ammonium salt, then reacting said fluorosulfonyl imide ammonium salt with a lithium compound to obtain the lithium sulfonyl imide salt, and finally purifying said lithium sulfonyl imide salt with the help of a specific solvent. The issue of the presence of impurities is here solved by the implementation of a final specific purification step.

We believe that there is still room for improvement for providing a new method for producing bis(fluorosulfonyl)imide alkali salts which provides a high-purity product.

Documents JP2018055882 A, CN102055018 B and KR101982602 B1 disclose the preparation of lithium bis(fluorosulfonyl)imide.

### BRIEF DESCRIPTION OF THE INVENTION

The Applicant provides hereafter a new method for producing alkali salt of bis(fluorosulfonyl)imide of high purity.

One subject-matter of the invention is a method for producing an alkali salt of bis(fluorosulfonyl)imide, comprising the step of reacting, within an organic reaction medium, an ammonium salt of bis(fluorosulfonyl)imide with an alkali agent, to produce alkali salt of bis(fluorosulfonyl)imide and ammonia; and simultaneously contacting the reaction medium with an inert gas stream to strip out ammonia.

Advantageously, the method according to the present invention makes it possible to obtain a product of very high purity. Without wishing to be bind by any theory, the inventors believe that the formation of impurities in prior art methods was due to unexpected and unknown reactions between ammonia generated during the reaction and the solvent. In prior art processes, ammonia stayed too long in the reaction medium, and the methods used to reduce ammonia content, like vacuum, were not appropriate to solve this issue. Advantageously, the process according to the present invention allows reducing the ammonia amount in the reaction medium to theoretically zero. The residence time of ammonia within the reaction medium is advantageously very low. In addition, the method according to the invention may be implemented at industrial scale, according to either a continuous or a discontinuous mode.

### DESCRIPTION OF THE INVENTION

In the present disclosure, the expression "comprised between ... and ..." should be understood has including the limits.

The method according to the present invention relates to the production of an alkali salt of bis(fluorosulfonyl)imide. The alkali salt may be selected from the group consisting of lithium salt, sodium salt and potassium salt. Preferably, the alkali salt is a lithium salt, and the alkali salt of bis(fluorosulfonyl)imide obtained by the method according to the invention is lithium salt of bis(fluorosulfonyl)imide Li⁺ (FSO₂)₂N⁻ (LiFSI).

The method according to the present invention comprises the step of reacting, within an organic reaction medium, an ammonium salt of bis(fluorosulfonyl)imide with alkali hydroxide, alkali carbonate, alkali hydrogencarbonate or alkali hydride, to produce alkali salt of bis(fluorosulfonyl)imide and ammonia.

The organic reaction medium comprises at least one organic solvent. Thus, the reaction is carried out in an organic solvent, mixtures of organic solvents or mixtures of organic solvent(s) and water. Said organic solvent may be selected from the aprotic organic solvents, preferably:
- cyclic and acyclic carbonates, for instance ethylene carbonate, propylene carbonate, butylene carbonate, dimethyl carbonate, ethyl methyl carbonate, diethyl carbonate,
- cyclic and acyclic esters, for instance gamma-butyrolactone, gamma-valerolactone, methyl formate, methyl acetate, methyl propionate, ethyl acetate, ethyl propionate, isopropyl acetate, propyl propionate, butyl acetate,
- cyclic and acyclic ethers, for instance diethylether, diisopropylether, methyl-t-bu-tylether, dimethoxymethane, 1,2-dimethoxyethane, tetrahydrofuran, 2-methyltetrahydrofuran, 1,3-dioxane, 4-methyl-1,3-dioxane, 1,4-dioxane,
- amide compounds, for instance N,N-dimethylformamide, N-methyl oxazolidinone,
- sulfoxide and sulfone compounds, for instance sulfolane, 3-methylsulfolane, dimethylsulfoxide,
- cyano-, nitro-, chloro- or alkyl- substituted alkane or aromatic hydrocarbon, for instance acetonitrile, valeronitrile, adiponitrile, benzonitrile, nitromethane, nitrobenzene.

According to a preferred embodiment, the solvent is selected from the group consisting of ethyl acetate, isopropyl acetate, butyl acetate, ethylene carbonate, dimethyl carbonate, ethyl methyl carbonate, propylene carbonate, valeronitrile and acetonitrile.

The alkali agent is preferably selected from the group consisting of alkali hydroxide, alkali carbonate, alkali hydrogencarbonate and alkali hydride. The alkali hydroxide may be selected from the group consisting of lithium hydroxide, sodium hydroxide and potassium hydroxide. Preferably, the alkali hydroxide is a lithium hydroxide. The alkali carbonate may be selected from the group consisting of lithium carbonate, sodium carbonate and potassium carbonate. Preferably, the alkali carbonate is a lithium carbonate. The alkali hydrogencarbonate may be selected from the group consisting of lithium hydrogencarbonate, sodium hydrogencarbonate and potassium hydrogencarbonate. Preferably, the alkali hydrogencarbonate is a lithium hydrogencarbonate. The alkali hydride may be selected from the group consisting of lithium hydride, sodium hydride and potassium hydride. Preferably, the alkali hydride is a lithium hydride.

The expression "alkali agent" also includes here hydrates thereof.

Preferably, alkali hydroxide or alkali hydroxide hydrate may be used. If the alkali agent is a lithium salt, then it may be selected from the group consisting of lithium hydroxide LiOH and lithium hydroxide hydrate LiOH.H₂O.

Said alkali agent may be added as a solid, as a pure liquid or as an aqueous or organic solution. Preferably, the presence of water within the reaction medium has to be reduced or avoided. Therefore, while not excluded, the use of aqueous solution of alkali agent is not preferred.

The amount of alkali metal from the alkali agent used is preferably comprised between 0.5 and 5 mol, more preferably between 0.9 and 2 mol, and even more preferably between 1 and 1.5 mol, per 1 mol of ammonium salt of bis(fluorosulfonyl)imide. In the case that the alkali agent contains 1 mole of alkali metal by mole of alkali agent, then the amount of alkali agent used is preferably comprised between 0.5 and 5 mol, more preferably between 0.9 and 2 mol, and even more preferably between 1 and 1.5 mol, per 1 mole of ammonium salt of bis(fluorosulfonyl)imide. If it is not the case, then the ratio will be calculated accordingly. For instance, in the case of an alkali agent containing 2 moles of alkali metal per mole of alkali agent, then the amount of alkali agent used is preferably comprised between 0.25 and 2.5 mol, more preferably between 0.45 and 1 mol, and even more preferably between 0.5 and 0.75 mol, per 1 mol of ammonium salt of bis(fluorosulfonyl)imide.

In addition to the desired product, which is the alkali salt of bis(fluorosulfonyl)imide, the reaction between the ammonium salt of bis(fluorosulfonyl)imide and the alkali agent generates NH₄OH, which is in equilibrium with ammonia and water. Simultaneously to the reaction between the ammonium salt of bis(fluorosulfonyl)imide and alkali hydroxide, carbonate, hydrogencarbonate or hydride, the method according to the invention further comprises the step consisting of contacting the reaction medium with an inert gas stream to strip out ammonia.

The stripping of a chemical component dissolved in a liquid phase by a gas, usually called stripping gas, is a method known by the persons working unit operations in chemical engineering. Stripping of ammonia by air has been widely disclosed, especially for wastewater treatment. General principle of the technology may for instance be found in Ullmann's Encyclopedia of Industrial Chemistry, 2012 "Absorption, 2. Design of Systems and Equipment" by Manfred Kriebel. Another application of this technology is disclosed for instance in US 2009/0191113. However, to the best of the knowledge of the inventors, it is the first time that this technology is applied to the present reaction.

The expression "simultaneously" is intended to mean here that the stripping of ammonia out of the reaction medium is carried out during a substantial part of the time of the reaction, i.e. during more than 50% of the time of the reaction, preferably during more than 75% of the time of the reaction, even more preferably during more than 90% of the time of the reaction. According to a preferred embodiment, the stripping is carried out at least during the beginning of the reaction, when the generation of ammonia is the more substantial.

The inert gas may be any suitable gas which does not chemically react with any of the chemical compounds present in the reaction medium. Preferably, for security reasons, the inert gas may be selected according to the solvent of the reaction medium so as to stay outside of the flammability limits of the reaction medium. It may be selected from the group consisting of nitrogen, argon, and depleted air. In this text, "depleted air" means oxygendepleted air, for instance air comprising less than 10% of oxygen. According to a preferred embodiment, the inert gas is nitrogen.

The reaction and the stripping may be carried out in a batch mode, a semi-batch mode or a continuous mode, preferably in a continuous mode, within a continuous stirred tank reactor, a series of continuous stirred tank reactors or within a column reactor.

According to a first embodiment, the reaction according to the invention is carried out in a stirred tank reactor, provided with a gas injector at the bottom and a gas collector at the top. The inert gas is fed to the bottom of the stirred tank reactor through the gas injector, contacts the reaction medium, and is released at the top of the stirred tank reactor through the gas collector. This first embodiment could be adapted to low production volumes.

According to a second embodiment, the reaction according to the present invention is carried out in a multi-stage gas-liquid extraction column, also known as stripper. Said stripper is provided with a gas injector at the lower part of the column and a gas collector at the upper part of the column. The inert gas is fed to the lower part of the column through the gas injector, contacts the reaction medium by flowing counter-currently upwards to the down-flowing reaction medium, and is released at the upper part of the column through the gas collector. Typically, the stripper may exhibit 3 to 15 theoretical plates. External heat duties may be provided to the column, especially at the second and last stages. This second embodiment could be adapted to high production volumes. The person skilled in the art will be able to select a suitable device among the commercial devices.

During the contact with the reaction medium, the inert gas adsorbs ammonia; released inert gas is therefore enriched with ammonia, whereas concentration of ammonia within the reaction medium decreases. The contact between liquid and gas can be improved by the use of suitable interns. Typically, interns for columns can be selected from mass-transfer plates, random packing and structured packing. For stirred tank, the contact between liquid and gas can be improved by the use of a gas diffuser or a perforate plate.

The temperature of the reaction medium may be comprised between 0°C and 100°C, more preferably between 10°C and 60°C, and even more preferably between 20°C and 50°C. The temperature of the inert gas before contacting the reaction medium may be the same as the temperature of the reaction medium, or at +/- 20 °C compared to the reaction medium. Providing hot inert gas may be used instead of external heating system. According to a first embodiment, the temperature is constant during the reaction. According to a second embodiment, the temperature is not kept constant during the reaction; the temperature preferably follows to an increasing ramp. The temperature may be maintained below the flammability limits of the reaction medium, for security reasons, in accordance with the selected inert gas.

Preferably, the reaction is carried out at atmospheric pressure, but it is not excluded to work below or above atmospheric pressure, for instance between 5 mbar and 1.5 bar, preferably between 5 mbar and 100 mbar. According to another embodiment, the method according to the invention is carried out under reduced pressure.

The concentration of ammonium salt of bis(fluorosulfonyl)imide within the reaction medium may be comprised between 5% and 50%, preferably between 10% and 40%, and even more preferably between 15% and 35%, by weight.

The flow of inert gas is adapted according to the design of the reactor and according to the other parameters of the reaction in order to obtain an effective removal of ammonia. Typically, the flow of inert gas may be comprised between 0.2 and 30 tons, by tons of ammonium salt of bis(fluorosulfonyl)imide + solvent. More specifically, when the reaction is carried out in a stirred tank reactor, the flow of inert gas may be comprised between 1 and 30 tons, preferably between 2 and 20 tons, even more preferably between 3 and 10 tons, by tons of ammonium salt of bis(fluorosulfonyl)imide + solvent. Besides, when the reaction is carried out in a multi-stage gas-liquid extraction column, the flow of inert gas may be comprised between 0.2 and 20 tons, preferably between 0.2 and 2 tons, even more preferably between 0.4 and 1 tons, by tons of ammonium salt of bis(fluorosulfonyl)imide + solvent. The quantity of inert gas might be 5 to 15 times lower when the reaction is carried out in a multi-stage gas-liquid extraction column, when compared to the same reaction carried out in a stirred tank reactor.

According to a preferred embodiment, after ammonia stripping, the inert gas enriched with ammonia is collected, washed and recycled. The additional washing and recycling step may consist in trapping ammonia in a scrubber filled with acidic aqueous solution and recover pure inert gas from the scrubber.

According to a preferred embodiment, after ammonia stripping, the reaction medium contains less than 10 000ppm of ammonia, more preferably less than 5 000ppm of ammonia, more preferably less than 1 000ppm of ammonia, more preferably less than 500ppm of ammonia, more preferably less than 300ppm of ammonia, more preferably from 0 to 100ppm of ammonia, more preferably from 1ppm to 50ppm of ammonia, and even more preferably from 5ppm to 20ppm of ammonia. In this text, the content of ammonia refers to the concentration by weight of NH₃ and NH₄⁺ in the considered medium. For ammonium salts, only the weight of NH₄⁺ is considered, and not the total weight of the salt.

Further treatments of the reaction medium may be carried out in order to recover very pure alkali salt of bis(fluorosulfonyl)imide. The reaction medium may be a biphasic (aqueous/organic) solution, especially when the alkali salt is an aqueous solution. In this case, the method may comprise a phase separation step, during which the aqueous phase is removed and the alkali salt of bis(fluorosulfonyl)imide is recovered in the organic phase. Additional steps may comprise filtration, concentration, extraction, recrystallization, purification by chromatography, drying and/or formulation.

Advantageously, the alkali salt of bis(fluorosulfonyl)imide obtained by the method according to the invention has a very high purity. It may show a purity of salts above 90%, preferably above 95%, more preferably between 99% and 100%.

Preferably, it may show the following contents of anions:
- a chloride (Cl⁻) content of below 10 000 ppm, preferably below 5 000 ppm, more preferably below 1 000 ppm, more preferably below 500 ppm, more preferably below 100 ppm, more preferably below 50 ppm, more preferably below 20 ppm; and/or
- a fluoride (F⁻) content of below 10 000 ppm, preferably below 5 000 ppm, more preferably below 1 000 ppm, more preferably below 500 ppm, more preferably below 100 ppm, more preferably below 50 ppm, more preferably below 20 ppm; and/or.
- a sulfate (SO₄²⁻) content of below 30 000 ppm, preferably below 10 000 ppm, more preferably below 5 000 ppm.

Preferably, it may show the following contents of metal elements:
- an iron (Fe) content of below 1 000 ppm, preferably below 800 ppm, more preferably below 500 ppm; and/or
- a chromium (Cr) content of below 1 000 ppm, preferably below 800 ppm, more preferably below 500 ppm; and/or
- a nickel (Ni) content of below 1 000 ppm, preferably below 800 ppm, more preferably below 500 ppm; and/or
- a zinc (Zn) content of below 1 000 ppm, preferably below 100 ppm, more preferably below 10 ppm, and/or
- a copper (Cu) content of below 1 000 ppm, preferably below 100 ppm, more preferably below 10 ppm; and/or
- a bismuth (Bi) content of below 1 000 ppm, preferably below 100 ppm, more preferably below 10 ppm.

Additionally, when the alkali salt of bis(fluorosulfonyl)imide is not sodium bis(fluorosulfonyl)imide, it may show:
- a sodium (Na) content of below 10 000 ppm, preferably below 5 000 ppm, more preferably below 500 ppm.

Additionally, when the alkali salt of bis(fluorosulfonyl)imide is not potassium bis(fluorosulfonyl)imide, it may show:
- a potassium (K) content of below 10 000 ppm, preferably below 5 000 ppm, more preferably below 500 ppm.

Thanks to its very high purity, the alkali salt of bis(fluorosulfonyl)imide, and preferably the lithium bis(fluorosulfonyl)imide, obtainable by the method according to the invention, may be advantageously used in electrolyte compositions for batteries.

Advantageously, the alkali salt of bis(fluorosulfonyl)imide obtained by the process according to the present invention does not comprise by-products due to undesired reaction of ammonia with intermediate products and/or with the solvent.

Another object of the present invention is the use of an inert gas stripping during the reaction of an ammonium salt of bis(fluorosulfonyl)imide with an alkali agent, to produce alkali salt of bis(fluorosulfonyl)imide, to decrease or avoid the formation of by-products.

The ammonium salt of bis(fluorosulfonyl)imide used in the method according to the present invention may be obtained by any method known by the person skilled in the art. It may be purchased or prepared by an upstream process. According to one embodiment, the present invention relates to a method for producing an alkali salt of bis(fluorosulfonyl)imide, comprising preparing ammonium salt of bis(fluorosulfonyl)imide, and then reacting, within a reaction medium, the ammonium salt of bis(fluorosulfonyl)imide with an alkali agent, to produce alkali salt of bis(fluorosulfonyl)imide, and ammonia; and simultaneously contacting the reaction medium with an inert gas stream to strip out ammonia.

Examples of processes for preparing ammonium salt of bis(fluorosulfonyl)imide may be found for instance in the Patent applications WO 2009/123328, EP 2 674 395 and EP 2 660 196. One specific method for preparing ammonium salt of bis(fluorosulfonyl)imide in disclosed hereafter.

The preliminary step of preparing ammonium salt of bis(fluorosulfonyl)imide may consists in reacting bis(chlorosulfonyl)imide or salts thereof with ammonium fluoride to produce ammonium salt of bis(fluorosulfonyl)imide.

Bis(chlorosulfonyl)imide or salts thereof is used as raw material. It may be represented by the formula:

(Cl-SO₂-N⁻-SO₂-Cl) X⁺

wherein X represents one from the group consisting of H, Li, Na, K, Cs and NH₄.

According to a preferred embodiment, the raw material is bis(chlorosulfonyl)imide of formula (Cl-SO₂)₂-NH (commonly represented by CSIH). CSIH is commercially available, or produced by a known method, for example:
- by reacting chlorosulfonyl isocyanate ClSO₂NCO with chlorosulfonic acid ClSO₂OH;
- by reacting cyanogen chloride CNCl with sulfuric anhydride SO₃, and with chlorosulfonic acid ClSO₂OH;
- by reacting sulfamic acid NH₂SO₂OH with thionyl chloride SOCl₂ and with chlorosulfonic acid ClSO₂OH.

According to a preferred embodiment, the fluorinating agent is ammonium fluoride NH₄F. Within the present invention, the expression "ammonium fluoride" also includes HF adducts of ammonium fluoride, for example NH₄F(HF)ₙ, wherein n is 1 to 10, preferably 1 to 4, more preferably NH₄F.HF or NH₄F(HF)₂. The fluorinating agent may be commercially available, or produced by a known method.

According to a preferred embodiment, ammonium fluoride is anhydrous. Moisture content may be preferably below 5000 ppm, more preferably below 1000 ppm, even more preferably below 500 ppm.

The amount of ammonium fluoride used is preferably comprised between 1 and 10 equivalents, more preferably between 1 and 7 equivalents, and even more preferably between 2 and 5 equivalents, per 1 mol of the bis(chlorosulfonyl)imide or the salt thereof.

The reaction may be carried out preferably in an organic solvent. Said organic solvent may be selected from the aprotic organic solvents, preferably:
- cyclic and acyclic carbonates, for instance ethylene carbonate, propylene carbonate, butylene carbonate, dimethyl carbonate, ethyl methyl carbonate, diethyl carbonate,
- cyclic and acyclic esters, for instance gamma-butyrolactone, gamma-valerolactone, methyl formate, methyl acetate, methyl propionate, ethyl acetate, ethyl propionate, isopropyl acetate, propyl propionate, butyl acetate,
- cyclic and acyclic ethers, for instance diethylether, diisopropylether, methyl-t-bu-tylether, dimethoxymethane, 1,2-dimethoxyethane, tetrahydrofuran, 2-methyltetrahydrofuran, 1,3-dioxane, 4-methyl-1,3-dioxane, 1,4-dioxane,
- amide compounds, for instance N,N-dimethylformamide, N-methyl oxazolidinone,
- sulfoxide and sulfone compounds, for instance sulfolane, 3-methylsulfolane, dimethylsulfoxide,
- cyano-, nitro-, chloro- or alkyl- substituted alkane or aromatic hydrocarbon, for instance acetonitrile, valeronitrile, adiponitrile, benzonitrile, nitromethane, nitrobenzene.

According to a preferred embodiment, the organic solvent is selected from the group consisting of ethyl acetate, isopropyl acetate, butyl acetate, ethylene carbonate, dimethyl carbonate, ethyl methyl carbonate, propylene carbonate, valeronitrile and acetonitrile.

According to a preferred embodiment, the organic solvent is anhydrous. Moisture content may be preferably below 5000 ppm, more preferably below 1000 ppm, more preferably below 500 ppm, more preferably below 100 ppm even more preferably below 50 ppm.

The reaction may be carried out at a temperature of between 0°C and 200°C, preferably, between 30°C and 100°C. Preferably, the reaction is carried out at atmospheric pressure, but it is not excluded to work below or above atmospheric pressure, for instance between 800 mbar and 1.2 bar.

The reaction may be carried out in a batch, semi-batch or continuous mode. According to a preferred embodiment, the ammonium fluoride is first added to the organic solvent. Then, the bis(chlorosulfonyl)imide or a salt thereof may be added to the reaction medium.

By reacting bis(chlorosulfonyl)imide or salts thereof with ammonium fluoride according to the present invention, ammonium salt of bis(fluorosulfonyl)imide can be obtained.

According to a preferred embodiment, the steps for preparing ammonium salt of bis(fluorosulfonyl)imide may further comprise an optional step which consists in adding a basic compound to the reaction medium. Said basic compound may be a solid, a pure liquid, an aqueous or organic solution or a gas. Said basic compound may be selected from the group consisting of gaseous ammonia, ammonia water, amines, hydroxide, carbonates, phosphates, silicates, borates, formates, acetates, stearates, palmitates, propionates or oxalates of alkali or alkaline-earth metal. Among amines, any type of amines may be convenient, including, aliphatic amines (such as ethylamine, propylamine, butylamine, pentylamine, hexylamine, heptylamine, octylamine, dimethylamine, diethylamine, dipropylamine, dibutylamine, 2-ethylhexylamine, trimethylamine, triethylamine, tripropylamine and tributylamine), alkylenediamines (such as ethylenediamine, diethylenetriamine, triethylenetetramine, tetraethylenepentamine and pentaethylenehexamine), alkanolamines (such as monoethanolamine, diethanolamine, triethanolamine, monoisopropanolamine, diisopropanolamine and triisopropanolamine), alicyclic amines (such as cyclohexylamine and dicyclohexylamine), aromatic amines (such as benzylamine and metaxylenediamine), ethylene oxide adducts of these amines, formamidine, guanidine, amidine, and heterocyclic amines (such as diazabicycloundecene, diazabicyclononene, piperidine, morpholine, piperazine, pyrimidine, pyrrole, imidazole, imidazoline, triazole, thiazole, pyridine and indole). The basic compound according to the invention is preferably gaseous ammonia or ammonia water.

The amount of added basic compound is preferably of between 0.1 and 10 equivalents, preferably between 0.5 and 5 equivalents, more preferably between 0.5 and 3 equivalents, based on the initial quantity of bis(chlorosulfonyl)imide or salts thereof.

The temperature is preferably maintained between 0°C and 100°C, more preferably between 15°C and 90°C. Advantageously, this optional step may be carried out at the same temperature as the previous step of reacting bis(chlorosulfonyl)imide or salts thereof with ammonium fluoride.

Optionally, the method according to the invention may comprise an intermediary separation step. This intermediary separation step may be performed by any typical separation means known by the person skilled in the art, for example by filtration (for instance under pressure or under vacuum) or decantation. Alternatively or in addition, such intermediate separation step may be carried out after addition of the basic compound.

The obtained ammonium salt of bis(fluorosulfonyl)imide may be further purified, preferably by crystallization.

Before the start of said crystallization, the concentration of the ammonium salt of bis(fluorosulfonyl)imide within the reaction medium may be comprised between 10% and 95% by weight, preferably between 30% and 80% by weight, and more preferably between 40% and 70% by weight. The method may comprise a further step consisting in concentrating the ammonium salt of bis(fluorosulfonyl)imide within the reaction medium, typically by evaporating a part of the organic solvent of the reaction medium, by heating, by decreasing the pressure, or both. According to one embodiment, the concentration step may consists in a distillation of the solvent at a temperature comprised between 0°C and 120°C, preferably between 5°C and 80°C, more preferably between 10°C and 70°C. The pressure may be adjusted depending on the nature of the solvent, typically between atmospheric pressure and 10⁻² mbar, preferably between 1 mbar and 500 mbar, and more preferably between 5 mbar and 100 mbar. The distillation may be performed by any typical means known by the person skilled in the art on a continuous process mode or on a discontinuous/batch mode, for example a continuous batch mode solvent evaporation, a batch distillation, a continuous flow distillation of a short path, or a thin film evaporator.

Crystallization of the salt may be obtained by decreasing the temperature of the reaction mixture containing the salt, which may have been optionally previously concentrated, and/or by adding a precipitating solvent.

The temperature of the reaction mixture containing the salt may be decreased to a value below the temperature of solubility of the salt. Preferably, the temperature is decreased to a value comprised between the solvent boiling point and -20°C, more preferably between 70°C and -10°C, and even more preferably between 30°C and 0°C. During the reduction of the temperature, the pressure may preferably be kept constant. However, it is not excluded to reduce the pressure simultaneously. It may cause the evaporation of a part of the organic solvent of the reaction mixture. The pressure may be decreased to a value comprised between atmospheric pressure and 10⁻² mbar, preferably between 1 mbar and 500 mbar, and more preferably between 5 mbar and 100 mbar.

Alternatively or in addition, at least one precipitation solvent may be added to reaction mixture containing the salt. Said precipitation solvent may preferably be selected among the organic solvent which are highly soluble within the organic solvent of the reaction mixture, and which are bad solvent for the ammonium salt of bis(fluorosulfonyl)imide. Said precipitation solvent may be selected from the group consisting of halogenated solvents like dichloromethane, dichloroethane, chloroform, and carbon tetrachloride; substituted aromatic hydrocarbon solvents like chlorobenzene and toluene; and alkane solvents like hexane and heptane. Precipitation solvent may preferably be selected among dichloromethane and dichloroethane. The volume ratio between the precipitation solvent and the organic solvent of the reaction mixture may be comprised between 0.1 and 50, preferably between 0.2 and 20, more preferably between 0.5 and 15, and even more preferably between 1 and 10.

According to one embodiment of the present invention, the purification of ammonium salt of bis(fluorosulfonyl)imide consists in decreasing the temperature of the reaction mixture containing the salt without adding a precipitating solvent. According to another embodiment of the present invention, the purification of ammonium salt of bis(fluorosulfonyl)imide consists in adding a precipitating solvent without decreasing the temperature of the reaction mixture containing the salt. According to a third embodiment, which is preferred, the purification of ammonium salt of bis(fluorosulfonyl)imide consists in adding a precipitating solvent and decreasing the temperature of the reaction mixture containing the salt. The precipitation solvent is preferably added first, and the temperature is decreased afterwards. However, it is not excluded to proceed the other way, or to carry out the two actions simultaneously.

The separation of crystalized ammonium salt of bis(fluorosulfonyl)imide may be performed by any typical separation means known by the person skilled in the art, for example by filtration. Filtration may be carried out at atmospheric pressure, under pressure or under vacuum, by any means known by the person skilled in the art. Mesh size of the filtration medium may be preferably of 2 micrometer or below, more preferably of 0.45 micrometer or below, and even more preferably of 0.22 micrometer or below. Separated product may be washed once or several times with appropriate solvent. The crystallization and separation steps may be carried out one time or may be repeated twice or more if necessary to improve the purity of the separated crystallized salt.

Finally, the separated crystallized salt is preferably dried to obtain a pure dry product. Drying step may be carried out by any means known by the person skilled in the art, typically under reduced pressure and/or by heating and/or with an inert gas flow, typically a nitrogen flow.

Advantageously, the crystallized ammonium salt of bis(fluorosulfonyl)imide has a very high purity. It may show:
- a purity of the salts above 90%, preferably above 95%, more preferably between 99% and 100% (mass percent); and/or
- a content of solvent below 20%, preferably below 10%, more preferably between 0% and 1% (mass percent).

Preferably, it may show the following contents of anions:
- a chloride (Cl⁻) content of below 10 000 ppm, preferably below 5 000 ppm, more preferably below 1 000 ppm, more preferably below 500 ppm, more preferably below 100 ppm, more preferably below 50 ppm, more preferably below 20 ppm; and/or
- a fluoride (F⁻) content of below 10 000 ppm, preferably below 5 000 ppm, more preferably below 1 000 ppm, more preferably below 500 ppm, more preferably below 100 ppm, more preferably below 50 ppm, more preferably below 20 ppm; and/or.
- a sulfate (SO₄²⁻) content of below 30 000 ppm, preferably below 10 000 ppm, more preferably below 5 000 ppm.

Preferably, it may show the following contents of metal elements:
- an iron (Fe) content of below 1 000 ppm, preferably below 800 ppm, more preferably below 500 ppm; and/or
- a chromium (Cr) content of below 1 000 ppm, preferably below 800 ppm, more preferably below 500 ppm; and/or
- a nickel (Ni) content of below 1 000 ppm, preferably below 800 ppm, more preferably below 500 ppm; and/or
- a zinc (Zn) content of below 1 000 ppm, preferably below 100 ppm, more preferably below 10 ppm, and/or
- a copper (Cu) content of below 1 000 ppm, preferably below 100 ppm, more preferably below 10 ppm; and/or
- a bismuth (Bi) content of below 1 000 ppm, preferably below 100 ppm, more preferably below 10 ppm.

Additionally, it may show:
- a sodium (Na) content of below 10 000 ppm, preferably below 5 000 ppm, more preferably below 500 ppm, and/or
- a potassium (K) content of below 10 000 ppm, preferably below 5 000 ppm, more preferably below 500 ppm.

Generally speaking, all raw materials used in the method according to the invention, including solvents, reagents, etc., may preferably show very high purity criteria. Preferably, their content of metal components such as Na, K, Ca, Mg, Fe, Cu, Cr, Ni, Zn, is below 10 ppm, more preferably below 2 ppm.

In addition, some of the steps or all steps of the method according to the invention are advantageously carried out in equipment capable of withstanding the corrosion of the reaction medium. For this purpose, materials are selected for the part in contact with the reaction medium that are corrosion-resistant, such as the alloys based on molybdenum, chromium, cobalt, iron, copper, manganese, titanium, zirconium, aluminum, carbon and tungsten, sold under the Hastelloy^{®} brands or the alloys of nickel, chromium, iron and manganese to which copper and/or molybdenum are added, sold under the name Inconel^{®} or Monel^{™}, and more particularly the Hastelloy C276 or Inconel 600, 625 or 718 alloys. Stainless steels may also be selected, such as austenitic steels and more particularly the 304, 304L, 316 or 316L stainless steels. A steel having a nickel content of at most 22% by weight, preferably of between 6% and 20% and more preferentially of between 8% and 14%, is used. The 304 and 304L steels have a nickel content that varies between 8% and 12%, and the 316 and 316L steels have a nickel content that varies between 10% and 14%. More particularly, 316L steels are chosen. Use may also be made of equipment consisting of or coated with a polymeric compound resistant to the corrosion of the reaction medium. Mention may in particular be made of materials such as PTFE (polytetrafluoroethylene or Teflon) or PFA (perfluoroalkyl resins). Glass equipment may also be used. It will not be outside the scope of the invention to use an equivalent material. As other materials capable of being suitable for being in contact with the reaction medium, mention may also be made of graphite derivatives. Materials for filtration have to be compatible with the medium used. Fluorinated polymers (PTFE, PFA), loaded fluorinated polymers (Viton^{™}), as well as polyesters (PET), polyurethanes, polypropylene, polyethylene, cotton, and other compatible materials can be used.

### EXAMPLES

### Example 1

In a 250 mL stirred tank reactor, 40g of crystallized NH₄FSI was dissolved within 93mL of ethyl methyl carbonate. The temperature of the reactor was fixed at 30°C. 8.7g of LiOH.H₂O was added. N₂ gas was injected at the bottom of the reactor at a speed of 170g/h and the reaction was carried out during 8h while N₂ bubbling was continued.

Ammonium content was titrated by IPC. After 8h of reaction, the content of NH₄⁺/NH₃ was below 100 ppm.

### Example 2

The same reaction as in Example 1 was carried out in the absence of N₂ bubbling.

After 20h of reaction, the content of NH₄⁺/NH₃ was still above 10,000ppm.

### Purity analysis

The reaction mixtures obtained in Examples 1 and 2 were analyzed by potentiometry (NH₄⁺ content), capillarity electrophoresis and ionic chromatography, and ¹⁹F NMR.

The results are reported in Table 1.

| | Time | NH₄⁺/NH₃ | Impurity 1* | Impurity 2* | Impurity 3* |
|---|---|---|---|---|---|
| Ex.1 | 8h | < 100 ppm | not present | very low | not present |
| Ex.2 | 20h | 14,000 ppm | present | present | present |

| | | | | | |
|---|---|---|---|---|---|
| * Impurities 1, 2 and 3 were identified on the analysis spectrums. Without wishing to be bound by any theory, it is believed that these impurities corresponds to byproducts of the reaction of ammonia with EMC. | | | | | |

In the absence of any ammonia removal (Ex.2), the reaction time is long and the final product contains impurities which presence is undesirable for electronic use. When the reaction is carried out according to the invention (Ex. 1), reaction time is decrease and purity is improved. Remaining traces of Impurity 2 is believed to be low enough to not impaired electronic performances.

## Claims

1. Method for producing an alkali salt of bis(fluorosulfonyl)imide, comprising the step of reacting, within an organic reaction medium, an ammonium salt of bis(fluorosulfonyl)imide with an alkali agent, to produce alkali salt of bis(fluorosulfonyl)imide and ammonia; and simultaneously contacting the reaction medium with an inert gas stream to strip out ammonia.

2. The method according to Claim 1, wherein the alkali salt is selected from the group consisting of lithium salt, sodium salt and potassium salt, and preferably the alkali salt is a lithium salt.

3. The method according to Claim 1 or Claim 2, wherein the organic reaction medium comprises at least one organic solvent, said organic solvent being selected from the aprotic organic solvents, preferably from the group consisting of ethyl acetate, isopropyl acetate, butyl acetate, ethylene carbonate, dimethyl carbonate, ethyl methyl carbonate, propylene carbonate, valeronitrile and acetonitrile.

4. The method according to Claims 1 to 3, wherein the alkali agent is selected from alkali hydroxide, alkali carbonate, alkali hydrogencarbonate and alkali hydride, and preferably the alkali agent is lithium hydroxide LiOH or lithium hydroxide hydrate LiOH.H₂O.

5. The method according to Claims 1 to 4, wherein the inert gas is selected from group consisting of nitrogen, argon, and depleted air, and preferably the inert gas is nitrogen.

6. The method according to Claims 1 to 5, wherein the reaction is carried out in a stirred tank reactor, provided with a gas injector at the bottom and a gas collector at the top, and the inert gas is fed to the bottom of the stirred tank reactor through the gas injector, contact the reaction medium, and is released at the top of the stirred tank reactor through the gas collector.

7. The method according to Claims 1 to 5, wherein the reaction is carried out in a multi-stage gas-liquid extraction column, provided with a gas injector at the lower part of the column and a gas collector at the upper part of the column, and the inert gas is fed to the lower part of the column through the gas injector, contact the reaction medium by flowing counter-currently upwards to the down-flowing reaction medium, and is released at the upper part of the column through the gas collector.

8. The method according to Claims 1 to 7, wherein the temperature of the reaction medium is comprised between 0°C and 100°C, more preferably between 10°C and 60°C, and even more preferably between 20°C and 50°C.

9. The method according to Claims 1 to 8, wherein the flow of inert gas is comprised between 0.2 and 30 tons, by tons of ammonium salt of bis(fluorosulfonyl)imide and solvent from the organic reaction medium.

10. The method according to Claims 1 to 9, wherein the reaction is carried out under reduced pressure or at atmospheric pressure.

11. The method according to Claims 1 to 10, wherein the method further comprises a step consisting of collecting, washing and recycling the inert gas enriched with ammonia after ammonia stripping.

12. The method according to Claims 1 to 11, wherein the method further comprises the post-treatment of the reaction medium, said post-treatment comprising a phase separation step if the reaction medium is a biphasic (aqueous/organic) solution, during which the aqueous phase is removed and the alkali salt of bis(fluorosulfonyl)imide is recovered in the organic phase.

13. The method according to Claims 1 to 12, wherein the method further comprises the preliminary step consisting in preparing the ammonium salt of bis(fluorosulfonyl)imide, by reacting bis(chlorosulfonyl)imide or salts thereof with ammonium fluoride to produce ammonium salt of bis(fluorosulfonyl)imide.

14. Use of an inert gas stripping during the reaction of an ammonium salt of bis(fluorosulfonyl)imide with an alkali agent, to produce alkali salt of bis(fluorosulfonyl)imide, to decrease or avoid the formation of by-products.

## Patentansprüche

1. Verfahren zur Herstellung eines Alkalisalzes von Bis(fluorsulfonyl)imid, bei dem man ein Ammoniumsalz von Bis(fluorsulfonyl)imid in einem organischen Reaktionsmedium mit einem Alkalimittel zu einem Alkalisalz von Bis(fluorsulfonyl)imid und Ammoniak umsetzt und gleichzeitig das Reaktionsmedium zum Ausstrippen von Ammoniak mit einem Inertgasstrom in Kontakt bringt.

2. Verfahren nach Anspruch 1, wobei das Alkalisalz aus der Gruppe bestehend aus Lithiumsalz, Natriumsalz und Kaliumsalz ausgewählt wird und es sich bei dem Alkalisalz vorzugsweise um ein Lithiumsalz handelt.

3. Verfahren nach Anspruch 1 oder Anspruch 2, wobei das organische Reaktionsmedium mindestens ein organisches Lösungsmittel umfasst, wobei das organische Lösungsmittel aus aprotischen organischen Lösungsmitteln, vorzugsweise aus der Gruppe bestehend aus Essigsäureethylester, Essigsäureisopropylester, Essigsäurebutylester, Ethylencarbonat, Dimethylcarbonat, Ethylmethylcarbonat, Propylencarbonat, Valeronitril und Acetonitril, ausgewählt wird.

4. Verfahren nach den Ansprüchen 1 bis 3, wobei das Alkalimittel aus Alkalihydroxid, Alkalicarbonat, Alkalihydrogencarbonat und Alkalihydrid ausgewählt wird und wobei es sich bei dem Alkalimittel vorzugsweise um Lithiumhydroxid LiOH oder Lithiumhydroxidhydrat LiOH.H₂O handelt.

5. Verfahren nach den Ansprüchen 1 bis 4, wobei das Inertgas aus der Gruppe bestehend aus Stickstoff, Argon und abgereicherter Luft ausgewählt ist und es sich bei dem Inertgas vorzugsweise um Stickstoff handelt.

6. Verfahren nach den Ansprüchen 1 bis 5, wobei die Umsetzung in einem Rührkesselreaktor, der am Boden mit einer Gaseinleitungseinrichtung und am Kopf mit einer Gassammeleinrichtung versehen ist, durchgeführt wird und das Inertgas durch die Gaseinleitungseinrichtung dem Boden des Rührkesselreaktors zugeführt wird, das Reaktionsmedium kontaktiert und am Kopf des Rührkesselreaktors über die Gassammeleinrichtung abgeführt wird.

7. Verfahren nach den Ansprüchen 1 bis 5, wobei die Umsetzung in einer Mehrstufen-Gas-Flüssigkeit-Extraktionssäule, die im unteren Teil der Säule mit einer Gaseinleitungseinrichtung und im oberen Teil der Säule mit einer Gassammeleinrichtung versehen ist, durchgeführt wird und das Inertgas durch die Gaseinleitungseinrichtung dem unteren Teil der Säule zugeführt wird, das Reaktionsmedium kontaktiert, indem es im Gegenstrom nach oben zu dem nach unten strömenden Reaktionsmedium strömt, und im oberen Teil der Säule über die Gassammeleinrichtung abgeführt wird.

8. Verfahren nach den Ansprüchen 1 bis 7, wobei die Temperatur des Reaktionsmediums zwischen 0 °C und 100 °C, weiter bevorzugt zwischen 10 °C und 60 °C und noch weiter bevorzugt zwischen 20 °C und 50 °C liegt.

9. Verfahren nach den Ansprüchen 1 bis 8, wobei der Strom von Inertgas zwischen 0,2 und 30 Tonnen, bezogen auf Tonnen von Ammoniumsalz von Bis(fluorsulfonyl)imid und Lösungsmittel aus dem organischen Reaktionsmedium, liegt.

10. Verfahren nach den Ansprüchen 1 bis 9, wobei die Umsetzung unter vermindertem Druck oder bei Normaldruck durchgeführt wird.

11. Verfahren nach den Ansprüchen 1 bis 10, wobei das Verfahren ferner einen Schritt umfasst, der daraus besteht, dass das mit Ammoniak angereicherte Gas nach dem Ammoniakstrippen gesammelt, gewaschen und rezykliert wird.

12. Verfahren nach den Ansprüchen 1 bis 11, wobei das Verfahren ferner die Nachbehandlung des Reaktionsmediums umfasst, wobei die Nachbehandlung einen Phasentrennschritt umfasst, wenn es sich bei dem Reaktionsmedium um eine zweiphasige (wässrige/organische) Lösung handelt, während dem die wässrige Phase entfernt und das Alkalisalz von Bis(fluorsulfonyl)imid in der organischen Phase gewonnen wird.

13. Verfahren nach den Ansprüchen 1 bis 12, wobei das Verfahren ferner den vorgeschalteten Schritt umfasst, der daraus besteht, das Ammoniumsalz von Bis(fluorsulfonyl)imid durch Umsetzen von Bis(chlorsulfonyl)imid oder Salzen davon mit Ammoniumfluorid zur Bildung des Ammoniumsalzes von Bis(fluorsulfonyl)imid herzustellen.

14. Verwendung eines Inertgasstrippens bei der Umsetzung eines Ammoniumsalzes von Bis(fluorsulfonyl)imid mit einem Alkalimittel zu einem Alkalisalz von Bis(fluorsulfonyl)imid zur Verringerung oder Vermeidung der Bildung von Nebenprodukten.

## Revendications

1. Procédé de production d'un sel d'alcali de bis(fluorosulfonyl)imide, comprenant l'étape de réaction, dans un milieu de réaction organique, d'un sel d'ammonium de bis(fluorosulfonyl)imide avec un agent alcalin, pour produire un sel d'alcali de bis(fluorosulfonyl)imide et de l'ammoniac ; et simultanément la mise en contact du milieu de réaction avec un flux de gaz inerte pour extraire l'ammoniac.

2. Procédé selon la revendication 1, dans lequel le sel d'alcali est choisi dans le groupe constitué d'un sel de lithium, d'un sel de sodium et d'un sel de potassium, et de préférence, le sel d'alcali est un sel de lithium.

3. Procédé selon la revendication 1 ou la revendication 2, dans lequel le milieu de réaction organique comprend au moins un solvant organique, ledit solvant organique étant choisi parmi les solvants organiques aprotiques, de préférence dans le groupe constitué de l'acétate d'éthyle, l'acétate d'isopropyle, l'acétate de butyle, le carbonate d'éthylène, le carbonate de diméthyle, le carbonate d'éthylméthyle, le carbonate de propylène, le valéronitrile et l'acétonitrile.

4. Procédé selon les revendications 1 à 3, dans lequel l'agent alcalin est choisi parmi un hydroxyde d'alcali, un carbonate d'alcali, un hydrogénocarbonate d'alcali et un hydrure d'alcali, et de préférence l'agent alcalin est l'hydroxyde de lithium LiOH ou l'hydroxyde de lithium hydraté LiOH.H₂O.

5. Procédé selon les revendications 1 à 4, dans lequel le gaz inerte est choisi dans le groupe constitué de l'azote, l'argon et l'air appauvri, et de préférence, le gaz inerte est l'azote.

6. Procédé selon les revendications 1 à 5, dans lequel la réaction est conduite dans un réacteur à cuve agitée, pourvu d'un injecteur de gaz au fond et d'un collecteur de gaz au sommet, et le gaz inerte est alimenté au fond du réacteur à cuve agitée par l'intermédiaire de l'injecteur de gaz, entre en contact avec le milieu de réaction, et est évacué au sommet du réacteur à cuve agitée par l'intermédiaire du collecteur de gaz.

7. Procédé selon les revendications 1 à 5, dans lequel la réaction est conduite dans une colonne d'extraction gaz-liquide à étages multiples, pourvue d'un injecteur de gaz au niveau de la partie inférieure de la colonne et d'un collecteur de gaz au niveau de la partie supérieure de la colonne, et le gaz inerte est alimenté au niveau de la partie inférieure de la colonne par l'intermédiaire de l'injecteur de gaz, entre en contact avec le milieu de réaction par écoulement vers le haut à contre-courant du milieu de réaction s'écoulant vers le bas, et est évacué au niveau de la partie supérieure de la colonne par l'intermédiaire du collecteur de gaz.

8. Procédé selon les revendications 1 à 7, dans lequel la température du milieu de réaction est comprise entre 0 °C et 100 °C, plus préférablement entre 10 °C et 60 °C, et encore plus préférablement entre 20 °C et 50 °C.

9. Procédé selon les revendications 1 à 8, dans lequel l'écoulement de gaz inerte est compris entre 0,2 et 30 tonnes, par tonne de sel d'ammonium de bis(fluorosulfonyl)imide et de solvant provenant du milieu de réaction organique.

10. Procédé selon les revendications 1 à 9, dans lequel la réaction est conduite sous pression réduite ou à pression atmosphérique.

11. Procédé selon les revendications 1 à 10, le procédé comprenant en outre une étape constituée de la collecte, du lavage et du recyclage du gaz inerte enrichi en ammoniac après extraction au gaz de l'ammoniac.

12. Procédé selon les revendications 1 à 11, le procédé comprenant en outre le post-traitement du milieu de réaction, ledit post-traitement comprenant une étape de séparation de phase si le milieu de réaction est une solution biphasique (aqueuse/organique), pendant laquelle la phase aqueuse est retirée et le sel d'alcali de bis(fluorosulfonyl)imide est récupéré dans la phase organique.

13. Procédé selon les revendications 1 à 12, le procédé comprenant en outre l'étape préliminaire consistant à préparer le sel d'ammonium de bis (fluorosulfonyl) imide, par réaction de bis(chlorosulfonyl)imide ou de sels de celui-ci avec du fluorure d'ammonium pour produire le sel d'ammonium de bis(fluorosulfonyl)imide.

14. Utilisation d'une extraction par un gaz inerte pendant la réaction d'un sel d'ammonium de bis(fluorosulfonyl)imide avec un agent alcalin, pour produire un sel d'alcali de bis(fluorosulfonyl)imide, afin de diminuer ou d'éviter la formation de sousproduits.
